(19) Europäisches Patentamt

European Patent Office

Office européen des brevets

(11) **EP 0 902 292 B1**

(12) **EUROPÄISCHE PATENTSCHRIFT**

(45) Veröffentlichungstag und Bekanntmachung des Hinweises auf die Patenterteilung:
**10.12.2003 Patentblatt 2003/50**

(51) Int Cl.⁷: **G01P 21/02**, G01P 3/489, G01D 18/00, B60C 23/06

(21) Anmeldenummer: **98112646.9**

(22) Anmeldetag: **08.07.1998**

(54) **Verfahren zur Korrektur des Signales eines Geschwindigkeitssensors**

Method for correcting the signal of a speed sensor

Procédé de correction du signal d'un capteur de vitesse

(84) Benannte Vertragsstaaten:
**DE FR GB**

(30) Priorität: **14.08.1997 DE 19735313**

(43) Veröffentlichungstag der Anmeldung:
**17.03.1999 Patentblatt 1999/11**

(73) Patentinhaber: **Bayerische Motoren Werke Aktiengesellschaft**
**80788 München (DE)**

(72) Erfinder:
• **Vos, Serge**
**80797 München (DE)**
• **Wimmer, Markus**
**81475 München (DE)**

(56) Entgegenhaltungen:
EP-A- 0 756 951      WO-A-96/01980
DE-A- 19 540 674     US-A- 5 117 681
US-A- 5 541 859

**Beschreibung**

Die Erfindung betrifft ein Verfahren zur Ermittlung von geschwindigkeitsunabhängigen Frequenzen eines Nutzsignalanteils aus einem rechteckförmigen Signal, dessen Frequenz proportional zur Geschwindigkeit ist, mittels eines elektronischen Steuergeräts für Kraftfahrzeuge nach dem Oberbegriff des Patentanspruchs 1.

Ein derartiges Verfahren ist beispielsweise aus der DE 43 30 617 A1 zur Ermittlung des Reifenluftdrucks bei Kraftfahrzeugen bekannt. Dem bekannten Verfahren liegt die Erkenntnis zugrunde, daß die Änderung der Federsteifigkeiten durch Änderung des Luftdruckes im Reifen eine Verschiebung der Eigenfrequenzen des Rad-Reifensystems in Kraftfahrzeugen bewirkt. Die Auswertung dieser Resonanzfrequenzen erfolgt üblicherweise mittels einer FFT (Fast Fourier Transformations)-Analyse.

Nachteilig bei dieser Methode ist die sehr zeit- und speicherplatzintensive FFT-Analyse. Weitere Probleme entstehen bei erhöhter Geschwindigkeit und auf ebener Fahrbahn. Auf Straßen mit starker vertikaler Anregung (Kopfsteinpflaster, schlechte Landstraße) können die Resonanzfrequenzen aus den berechneten FFT-Spektren abgeleitet werden. Auf ebenen Straßen verfälschen jedoch Fehler in der Geschwindigkeitserfassung mittels ABS-Raddrehzahlsignalen diese Spektren. Die nicht zu vermeidenden Fertigungstoleranzen der ABS-Impulsräder (Geberräder) verursachen bei der Transformation der Zeitsignale in den Frequenzbereich Resonanzpegel, die mit der Drehgeschwindigkeit des Rades oder einer höheren Ordnung davon übereinstimmen. Ebenso verfälschen Unwuchten am Rad oder an den Wellen der angetriebenen Räder die Ermittlung der durch den Reifenluftdruck bestimmten Resonanzfrequenzen der ABS-Raddrehzahlsignale.

In der Patentschrift EP 0 363 014 wird ein Verfahren vorgestellt, womit mit Hilfe eines Kraftsensors eine Unwucht an den Vorderrädern festgestellt werden kann. Das in dieser Patentschrift EP 0 363 014 vorgestellte Verfahren benötigt zusätzliche Kraftsensoren und ist nicht in der Lage, eine Aussage bezüglich der Hinterräder zu machen.

Nach US-A-5 541 859 können für jeden Zahn eines Geschwindigkeitssensors Korrekturfaktoren bestimmt werden, wobei eine Mittelwertbildung über eine volle Umdrehung erfolgt.

Es ist Aufgabe der Erfindung, ein Verfahren eingangs genannter Art derart zu verbessern, daß systematische Fehler bei der Erfassung eines Geschwindigkeitssignals mittels Drehzahlsensoren ermittelt und eliminiert werden, um die Ermittlung der Frequenz(en) des Nutzsignalanteils des Geschwindigkeitssignals zu ermöglichen.

Diese Aufgabe wird durch die kennzeichnenden Merkmale des Patentanspruchs 1 gelöst.

Mit der erfindungsgemäßen Korrekturmethode des Drehzahl- bzw. Geschwindigkeitssignals können zum einen die Toleranzen und Teilungsfehler des Geberrades (z.B. ABS-Impulsrad) und zum anderen eine Exzentrizität des Drehlagers (z. B. Radlagers) oder der Antriebswelle oder eine Unwucht (z. B. am Rad) erfaßt werden. Dabei werden folgende mit jeder Umdrehung wiederkehrende Fehler eliminiert: zum einen die bei jeder Umdrehung am gleichen Ort kurzzeitig auftretenden extremen Veränderungen im Geschwindigkeitssignal (z. B. Teilungsfehler) und zum anderen die zyklischen, sich über eine ganze Umdrehung erstreckenden Änderungen im Geschwindigkeitssignal (z. B. Unwucht).

Eine vorteilhafte Weiterbildung der Erfindung ist der Gegenstand des Patentanspruchs 2. Hierdurch wird nach Eliminierung der genannten Fehler ein besonders einfaches Verfahren zur Auswertung der Frequenzen des Nutzsignalanteils geschaffen.

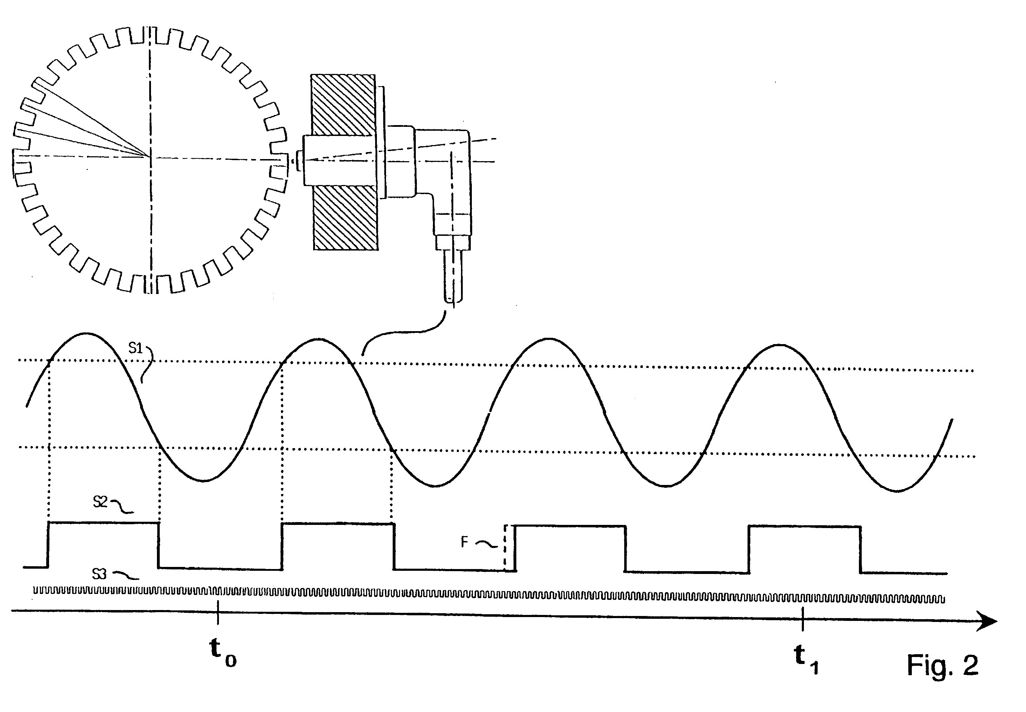

Das erfindungsgemäße Verfahren wird bevorzugt zur Schätzung des Reifenluftdrucks durch Ermittlung der Resonanzfrequenzen im Rad-Reifen-System eines Fahrzeuges verwendet. Die Erfindung wird am Beispiel dieser Anwendung näher erläutert. Das rechteckförmige Signal, dessen Frequenz proportional zur Geschwindigkeit ist, wird hierbei vorzugsweise mit einem Geberrad in Form eines 48 Zähne aufweisenden ABS-Impulsrades erzeugt. Im ff. wird das rechteckförmige Signal, dessen Frequenz proportional zur Geschwindigkeit ist, kurz rechteckförmiges Geschwindigkeitssignal genannt. Eine übliche Methode zur Erfassung des Geschwindigkeitssignals ist in Fig. 2 dargestellt. Ein induktiver Drehzahlsensor tastet die Zähne des Geberrades ab und erzeugt ab einer bestimmten Drehzahl ein sinusförmiges Signal S1. Dieses wird im Steuergerät oder bereits im Sensor selbst in ein rechteckförmiges Geschwindigkeitssignal S2 umgewandelt. Zur Messung der Dauer jedes einem Zahn zugeordneten Impulses, vorzugsweise von einer steigenden (oder fallenden) Flanke zur nächsten steigenden (oder fallenden) Flanke des Signals S2, läuft ein Zähler (Signal S3) mit, der der Dauer des Impulses einen Zählerstand bzw. Zahnwert zuordnet. Von einem derartigen Verfahren wird zur Erläuterung der Erfindung im folgenden ausgegangen.

Die Möglichkeit der Auswertung der Resonanzfrequenzen ist stark abhängig von der Anregung der Reifenschwingungen. Bei einem System, das auf einer Signalauswertung im Frequenzbereich basiert, muß die Leistung des Nutzsignales (z. B. auszuwertende Resonanzfrequenzen) bedeutend größer sein als die des Störsignales (z. B. Frequenzen durch Fehler im Geberrad oder aufgrund von Reifenunförmigkeiten). Das Nutzsignal entspricht der (Rad-)Geschwindigkeitsänderung durch Fahrbahnunebenheiten (die auszuwertenden Rad-Reifen-Resonanzschwingungen werden von der Straße angeregt), während das Störsignal der (Rad-) Geschwindigkeitsänderung durch Bauteiltoleranzen entspricht. Toleranzen führen auch bei konstanter Fahrgeschwindigkeit zu unterschiedlichen Abständen zwischen den Impulsflanken und täuschen somit falsche (Rad-) Geschwindigkeiten vor. Wenn die Anregung von der Straße ausreichend ist (Kopfsteinpflaster, schlechte Landstraße), kann eine Ermittlung der Resonanzfrequenzen im Signal erfolgen. Wenn die Anregung von der Straße in der gleichen Größenordnung des Störsignals liegt (Autobahn, Asphalt), verfälschen Fehler in der Geschwindigkeitserfassung die Auswertung. Darüber hinaus wird bei der Frequenzauswertung beispielsweise die Druckfrequenz des Rades und nicht die Rad-Reifen-Resonanzschwingung erfaßt.

Bei der Erfassung der Geschwindigkeitssignale wird davon ausgegangen, daß alle Zähne des ABS-Impulsrades (Geberrades) die gleiche Breite aufweisen. Tatsächlich entstehen jedoch durch Fertigungstoleranzen, Schweißnahtbreite und -dicke, Grate der Fertigung, Verformung bei der Montage, Korrosion und Materialinhomogenitäten unterschiedliche Zahnbreiten. Eine Verbesserung kann zwar durch eine Nachbehandlung erreicht werden, in der das ABS-Impulsrad nochmals abgeschliffen wird, aber die für hochfrequente Auswertung notwendige Genauigkeit wird dadurch nicht erreicht. Für die Funktion der Radschlupfregelsysteme sind die Bauteiltoleranzen noch ausreichend. Die relative Abweichung durch einen derartigen Fehler nimmt bei höheren Geschwindigkeiten zu, da die Geschwindigkeit den reziproken Wert der gemessenen Dauer darstellt.

Der zweite Grund, warum nicht alle erfaßten Zähne gleiche Zahnwerte bzw. Zählerstände aufweisen, liegt darin, daß immer eine Radungleichförmigkeit vorhanden ist, z.B. Unwucht, Exzentrizität des Radlagers oder der Antriebswelle und Verformung bei der Montage.

Das erfindungsgemäße Verfahren nützt das systematische Wiederkehren der Fehler (Teilungsfehler der Geberradzähne, Unwucht durch Radungleichförmigkeiten) aus, um diese zu eliminieren. Für jeden Zahn des Impulsrades wird der Fehler gelernt, den er gegenüber einem Sollwert (Mittelwert) aufweist. Die so ermittelten Faktoren dienen jeweils der Korrektur der gemessenen Werte.

In der Zeichnung ist ein Ausführungsbeispiel der Erfindung dargestellt. Es zeigen

Fig. 1 ein Gesamtsystem, in dem das erfindungsgemäße Verfahren vorzugsweise realisiert wird,

Fig. 2 eine übliche Methode als Beispiel zur Erfassung des Geschwindigkeitssignals

Fig.3 die durch die erfindungsgemäße Korrekturmethode erhaltenen zahnbezogenen Korrekturfaktoren,

Fig. 4 und Fig. 5 das Prinzip der Korrekturmethode und

Fig. 6 die Ermittlung einer Frequenz des Nutzsignalanteils (Resonanzfrequenz) durch Auswertung der Nulldurchgänge nach Eliminierung der zyklischen Fehler und nach einer Bandpaßfilterung

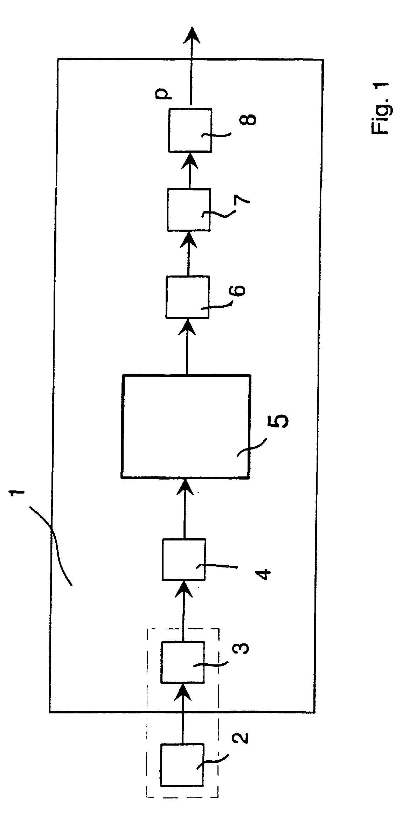

In Fig. 1 ist ein elektronischen Steuergerät 1, vorzugsweise ein Steuergerät für Bremssysteme (z. B. ABS/ASC) in Kraftfahrzeugen dargestellt, das als Eingangssignal das Geschwindigkeitssignal S1 (Fig. 2) eines Drehzahlsensors 2 erhält, der mit einem eine bestimmte Anzahl (z. B. 48) von äquidistanten Zähnen aufweisenden Geberrad (z. B. ABS-Impulsrad, Fig. 2) zusammenwirkt. Im Reckteckimpulsumformer 3 wird aus dem sinusförmigen Signal S1, dessen Frequenz proportional zur Geschwindigkeit ist (kurz sinusförmiges Geschwindigkeitssignal S1 genannt), ein rechteckförmiges Geschwindigkeitssignal S2 erzeugt. Der Rechteckimpulsformer 3 kann auch im Sensor 2 enthalten sein. Der Rechteckimpulsformer 3 ist mit einer Zählereinheit 4 (vgl. auch Signal S3, Fig. 2) verbunden, die die Dauer jedes Impulses des Geschwindigkeitssignals S2 in Form eines Zahnwertes bzw. Zählerstandes an die Korrektureinheit 5 übermittelt. In der Korrektureinheit 5 wird die Korrekturmethode des erfindungsgemäßen Verfahrens durchgeführt. Ausgangssignal der Korrektureinheit 5 ist ein durch das Lernen von Korrekturfaktoren von Fehlern, die über eine Umdrehung periodisch auftreten, bereinigtes Geschwindigkeitssignal. Dieses bereinigte Geschwindigkeitssignal enthält noch die geschwindigkeitsunabhängigen Frequenzen des Nutzsignalanteils, im vorliegenden Beispiel die Resonanzfrequenzen des Radsystems. Um diese Resonanzfrequenzen auszuwerten, wird das bereinigte Geschwindigkeitssignal über den Bandpaßfilter 6 zur Frequenzauswertungseinheit 7 weitergeführt. In der Frequenzauswertungseinheit 7 wird durch Auswertung der Nulldurchgänge $x_{0,i}$ des gefilterten Geschwindigkeitssignals $v_{gefiltert}$ die Ist-Resonanzfrequenz des Nutzsignalanteils sowie die Abweichung dieser Ist-Resonanzfrequenz von einer vorgegebenen Soll-Resonanzfrequenz ermittelt. In der Zuordnungseinheit 8 wird in Abhängigkeit von der ermittelten Abweichung eine Änderung des Reifenluftdruckes p geschätzt und beispielsweise einer hier nicht dargestellten Anzeige- oder Warneinheit übermittelt.

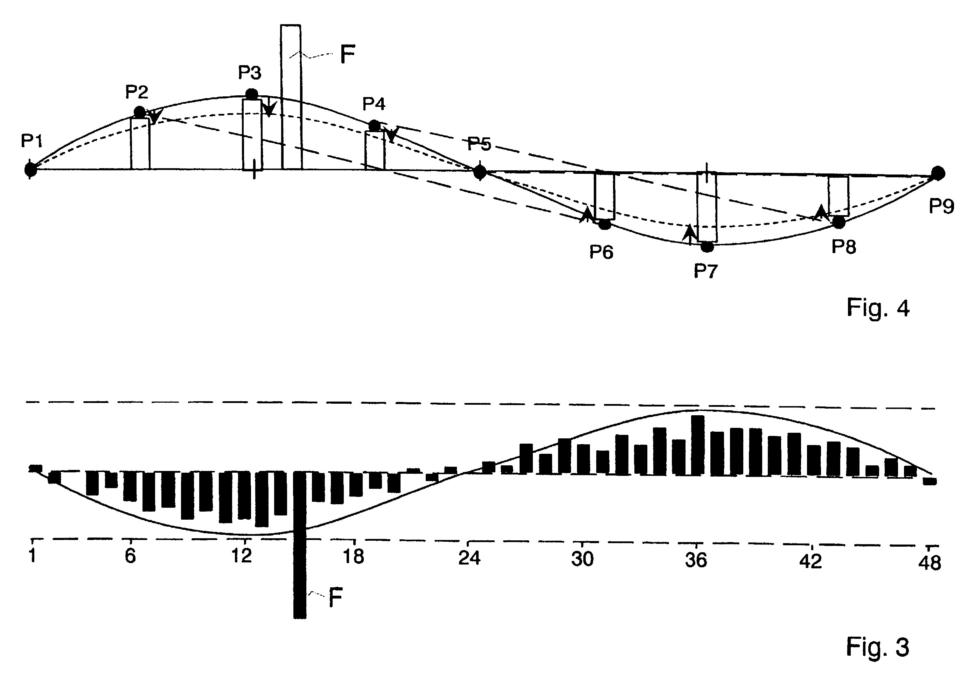

In Fig. 3 sind die durch die erfindungsgemäße Korrekturmethode für alle 48 Zähne des Geberrades erhaltenen Korrekturwerte bzw. Korrekturfaktoren dargestellt. Durch den dem Zahn 15 zugeordneten Korrekturwert ist ein Teilungsfehler F, der aufgrund einer ungleichmäßigen Zahnbreite (vgl. auch Signal S2 in Fig. 2) aufgetreten ist, eliminiert. Weiterhin ist durch die Korrekturfaktoren aller Zähne eine sich über eine Umdrehung erstreckende, beispielsweise sinusförmige Unwuchtschwingung, deren Frequenz geschwindigkeitsabhängig ist, eliminiert.

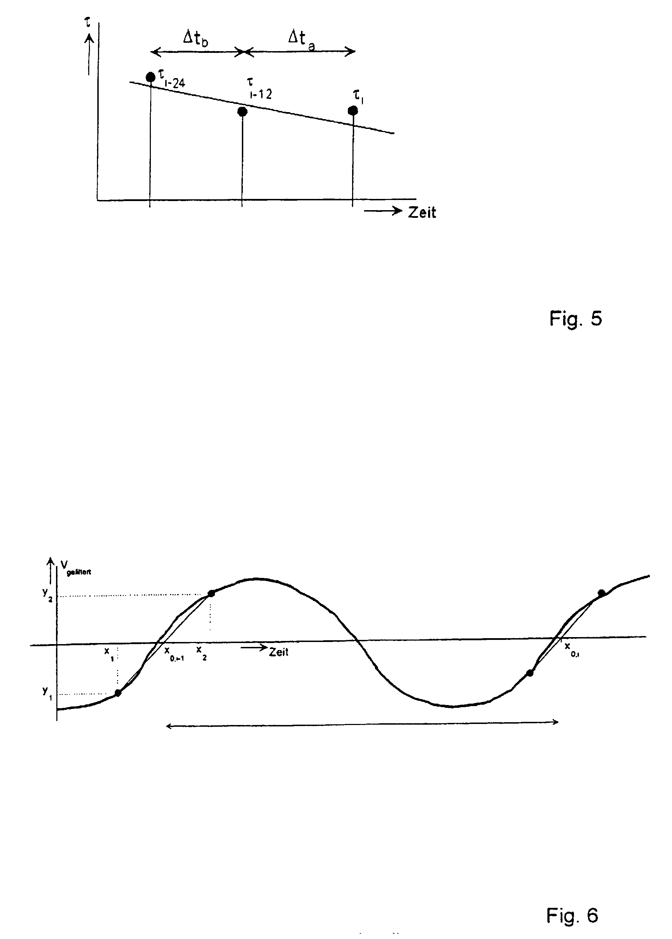

In Fig. 4 und 5 wird die Korrekturmethode zur Bestimmung der in Fig. 3 dargestellten Korrekturmethode näher erläutert.

Grundsätzlich wird die mittlere Geschwindigkeit erfaßt. Beispielsweise kann die mittlere Geschwindigkeit, d. h. der Mittelwert des Zählerstandes, eines Impulses vorher und eines Impulses nachher berechnet werden, wodurch zumindest ein Teilungsfehler erfaßt wird. Vorzugsweise werden jedoch die Zählerstände von einer Viertelumdrehung vorher und nachher verwendet, wodurch eine halbe Radumdrehung erfaßt wird. Dadurch können sowohl Teilungsfehler als auch Radunförmigkeitsfehler eliminiert werden. Vorteil hierbei ist, daß die Abweichungen von der mittleren Geschwindigkeit durch Fehler unabhängig von Teilabschnitten des Geberrades bzw. ABS-Impulsrades korrigiert werden. Abweichungen, die mit einer Radumdrehung periodisch sind, haben somit keinen Einfluß auf die zu berechnenden Geschwindigkeitswerte.

In Fig. 4 und 5 wird davon ausgegangen, daß pro Radumdrehung jeder Zahn erfaßt und korrigiert wird.

In Fig. 4 werden als Beispiele neun Abtastpunkte P9, die den Zählerständen bzw. den Zahnwerten von neun der 48 Zähne einer Umdrehung entsprechen, bei einer Umdrehung dargestellt. Eine zahnbezogene Korrektur nach einer Abweichung ist mit Pfeilen gekennzeichnet.

Nach Fig. 5 wird jedem Zahn des Impulsrades ein Index $i$ zugeordnet. Nach dem Überschreiten einer Sensoranspruchschwelle bei einer bestimmten Geschwindigkeit (z.B. v > 1 km/h) wird die Zuordnung aufgebaut. Wichtig dabei ist, daß die gelernten Korrekturwerte möglichst innerhalb weniger Sekunden vorliegen, wodurch die Erkennung eines Druckabfalls schnell sichergestellt werden kann.

Für eine mögliche Auslegungsform des Verfahrens werden jeweils der aktuelle und die letzten 24 erfaßten Zählerstände entsprechend einer halben Radumdrehung verwendet. Es wird vorausgesetzt, daß die Korrekturwerte aller Zähne jede Umdrehung neu berechnet werden und es wird die Annahme getroffen, daß sich in dem betrachteten kurzen Zeitintervall die Fahrzeuglängsbeschleunigung nur geringfügig ändert. Zum Zeitpunkt des aktuell gemessenen Zählerstandes $\tau_i$ (z. B. auch P5; P6; P7; P8; P9, Fig. 4) wird jeweils der Korrekturfaktor $k_{i-12}$ zum vorher gemessenen Zählerstand $\tau_{i-12}$ (z. B. auch P3; P4; P5; P6; P7, Fig. 4) berechnet, welcher den Zählerstand einer Viertelradumdrehung vorher darstellt. Der korrigierte Zählerstand $t_{i-12}$ wird mit Gleichung 1 bestimmt:

$$t_{i-12} = \tau_{i-12} \cdot (1 + k_{i-12}) \tag{1}$$

Die Berechnung der Korrekturfaktoren $k_i$ folgt aus der linearen Darstellung des Geschwindigkeitsverlaufes (Fig. 5) zwischen dem mit dem in dieser Radumdrehung erfaßten Korrekturfaktor korrigierten Zahnwert $t_{i-24}$ (z. B. auch P1; P2; P3; P4; P5, Fig. 4) und dem mit dem aus der vorigen Umdrehung berechneten Korrekturfaktor korrigierten Zahnwert $t_i$, Gleichung 2. Zwischen den Stützpunkten $i$ und $i-24$ wird ein linearer Verlauf gebildet. Der erfaßte Zählerstand $i-12$ wird gerade auf die lineare Linie zu diesem Abtastpunkt gelegt. Der dafür benötigte Korrekturfaktor $\kappa_{i-12}$ wird von der Gleichung 2 berechnet.

$$\kappa_{i-12} = \frac{\tau_i \cdot (1+k_i) \cdot \Delta t_b + \tau_{i-24} \cdot (1+k_{i-24}) \cdot \Delta t_a}{\tau_{i-12} \cdot (\Delta t_b + \Delta t_a)} - 1 \tag{2}$$

Die beiden Zeitabschnitte $\Delta t_a$ und $\Delta t_b$ werden jeweils mit Gleichung 3 berechnet.

$$\Delta t_a = \sum_{n=i-11}^{n=i} \tau_n \cdot (1+k_n) \qquad \text{und} \qquad \Delta t_b = \sum_{n=i-23}^{n=i-12} \tau_n \cdot (1+k_n) \tag{3}$$

Nach der Berechnung aller Korrekturfaktoren für jeden Zahn i des Geberrades folgt beispielsweise eine Filterung der Korrekturfaktoren, um den Einfluß der Fahrzeugbeschleunigung (d.h. kein linearer Verlauf der Gerade in Fig. 5) und des Straßenprofils zu vermindern. Dieses Filter berechnet einen gewichteten Mittelwert zwischen den Korrekturfaktoren der momentanen und vorherigen Umdrehung, Gleichung 4.

$$k_i = \frac{a \cdot k_{i-48} + \kappa_i}{a + 1} \tag{4}$$

Während der Laufzeit des Verfahrens wird der Faktor a angepaßt. Am Anfang sorgt ein kleiner Wert a für das schnelle Einschwingen auf den richtigen $k$-Wert; nach einiger Zeit wird der Faktor a vergrößert, wodurch das Nutzsignal weniger gefiltert und die Auflösung und Genauigkeit der Resonanzfrequenzberechnung gesteigert wird. Die Korrekturfaktoren werden laufend aktualisiert, da diese geschwindigkeitsabhängig sind.

Wenn die berechneten Korrekturfaktoren in einem Bild dargestellt werden, bekommt man einen Überblick, wie sich die Abweichungen der erfaßten Zählerstände über eine Radumdrehung verhalten. Fig. 3 zeigt die ermittelten Korrekturfaktoren nach beispielsweise zehn Radumdrehungen. Deutlich sichtbar ist der mit einer Umdrehung korrespondierende Verlauf der Abweichungen (F und Schwingung über eine Umdrehung). In der Initialisierungsphase (z. B. am Bandende oder nach Neumontage und Auswuchten des Rades) werden die Teilungsfehler, Exzentrizität des Impulsrades, des Radlagers und der Antriebswelle, sowie die Verformung bei der Montage als gesamtes Bild erfaßt und abgespeichert. Gravierende Änderungen dieses Bildes oder Unterschreiten einer festgelegten Schwelle der Korrelationsfunktion zwischen momentan erfaßtem und abgespeichertem Zustand können verwendet werden, um eine Unwucht oder eine andere Ungleichförmigkeit am Rad fest zu stellen. Ein Warnalgorithmus kann unzulässige Abweichungen dieses Bildes von einem Sollbild detektieren und eine Warnung ausgeben, falls die Abweichungen eine bestimmte Korrelationsschwelle unterschreitet.

Nach Fig. 5 wird bei einer Geschwindigkeit von 30 km/h in jedem Abtastzyklus, T = 5 ms, genau ein Zahnwert $\tau_i$ erfaßt. Höhere Geschwindigkeiten bringen mehrere Zahnwerte pro Abtastzyklus. Die Genauigkeit des Verfahrens wird bei höheren Geschwindigkeiten von einer gewichteten Mittelwertbildung der innerhalb eines Abtastzyklus erfaßten korrigierten Zahnwerte gesteigert.

Nach der oben beschriebenen Korrektur der Raddrehzahlsignale werden die korrigierten und gemittelten Geschwindigkeitswerte bevorzugt mit einem Bandpaß gefiltert. Die Mittenfrequenz des Bandpasses entspricht in etwa der interessierenden Resonanzfrequenz.

Eine sehr schnelle Methode zur Bestimmung einer Frequenz in einem gefilterten Signal ist die Auswertung der Periodendauer. Die Zeit zwischen zwei Nulldurchgängen ($x_{0,i}$) (Vorzeichenwechsel des Signals) wird berechnet, wobei deren reziproker Wert der Frequenz des Signals entspricht. Wenn sich das Vorzeichen von beispielsweise einem negativen Wert in einen positiven Wert ändert, wird die Zeit, die dem Nulldurchgang entspricht, mit einer linearen Beziehung annähernd berechnet (Fig. 6). Es gibt verschiedene Möglichkeiten um die richtige Signalfrequenz zu erfassen: man wertet nur positive Nulldurchgänge aus (eine Periode), man wertet nur negative Nulldurchgänge aus (eine Periode), man bildet zwischen diesem positiven und negativen Nulldurchgang einen Mittelwert oder man wertet die Zeit zwischen einem negativen-positiven und positiven-negativen Nulldurchgang aus (halbe Periode).

In Fig. 6 ist dargestellt, wie die Beziehung zwischen den diskreten Meßpunkten (($x_1,y_1$) und ($x_2,y_2$)) und dem Nulldurchgang ($x_{0,i},y_0$) abgeleitet werden kann. Für den Nulldurchgang muß gelten, daß der y-Wert gleich Null ist. Daraus ergibt sich die Gleichung 5.

$$y_0 = y_2 + \frac{(y_2 - y_1)}{(x_2 - x_1)} \cdot (x_2 - x_0) = 0 \tag{5}$$

Durch Lösen der rechten Gleichung, kann man eine Beziehung aufstellen, woraus der Zeitpunkt des Nulldurchganges bestimmt wird, siehe Gleichung 6.

$$x_0 = x_2 - \frac{(x_2 - x_1)}{(y_2 - y_1)} \cdot y_2 = t_2 - T_a \cdot \left( \frac{y_2}{y_2 - y_1} \right) \tag{6}$$

Der Wert $x_2$ entspricht dem aktuellen Zeitpunkt und kann deswegen durch $t_2$ ersetzt werden. Die Frequenz des gefilterten Signals folgt aus dem reziproken Wert der Differenz zwischen zwei aufeinanderfolgenden positiven bzw. negativen Nulldurchgängen, Gleichung 7, oder aus dem doppelten Wert der halben Periode, Gleichung 8.

$$f_{Signal}(t) = \frac{1}{(x_{0,i} - x_{0,i-1})} \tag{7}$$

$$f_{Signal}(t) = \frac{1}{2} \cdot \frac{1}{(x_{0,i} - x_{0,i-1})} \tag{8}$$

Nach jedem Nulldurchgang steht somit sofort ein aktueller Frequenzwert als Zeitsignal zur Weiterverarbeitung zur Verfügung. Ein Warnalgorithmus kann unzulässige Abweichungen der Resonanzfrequenzen von einem Sollwert detektieren und eine Warnung ausgeben, falls die berechnete Frequenz eine bestimmte Schwelle unterschreitet.

Mit den oben beschriebenen Verfahren kann ein kostengünstiges Reifenluftdrucküberwachungssystem dargestellt werden, welches keine zusätzliche Sensorik (z.B. Drucksensoren) benötigt und trotzdem die erforderliche Genauigkeit und Zuverlässigkeit von direkter Druckmessung bringt. Die Verfahren sind zudem unabhängig von Toleranzen der ABS-Sensorik bzw. der damit verbunden Bauteile. Selbst auf sehr ebenen Fahrbahnen ohne ersichtliche Unebenheiten lassen sich aus den ABS-Signalen die interessierenden (z.B. durch den Reifenluftdruck beeinflußten) Resonanzfrequenzen ermitteln.

Die Warnschärfe bleibt somit außer bei ABS-Regelbremsungen in allen Fahrsituationen erhalten. Zusätzlich bekommt man einen Überblick, wie die Abweichungen der Geschwindigkeitserfassung über eine Radumdrehung verteilt sind. Diese Abweichungen können zum Auswerten oder Erfassen einer Änderung in der Radungleichförmigkeit (z.B. Radunwucht oder Stein im Profil...) verwendet werden.

Vorteile gegenüber dem in der Patentschrift EP 0 363 014 beschriebenen Verfahren liegen darin, daß keine zusätzlichen Kraftsensoren benötigt werden, falls auf bereits vorhandene ABS-Sensorik zurückgegriffen werden kann und daß ebenfalls eine (Änderung der) Ungleichförmigkeit an den Hinterrädern festgestellt werden kann.

**Patentansprüche**

1. Verfahren in Kraftfahrzeugen zur Ermittlung von geschwindigkeitsunabhängigen Frequenzen, speziell Resonanzfrequenzen, eines Nutzsignalanteils aus einem rechteckförmigen Geschwindigkeitssignal (S2), das mittels eines Drehzahtsensors (2) erzeugt wird, der mit einem eine bestimmte Anzahl (48) von nahezu äquidistanten Zähnen aufweisenden Geberrad zusammenwirkt, **dadurch gekennzeichnet, dass** mittels eines elektronischen Steuergeräts (1)

   - die Dauer bzw. der Zählerstand jedes Impulses (i) des rechteckförmigen Geschwindigkeitssignals (S2) gemessen wird,
   - zum Zeitpunkt des aktuell gemessenen Zählerstandes ($\tau_i$) jeweils der Korrekturfaktor ($k_{i-12}$) zum vorher gemessenen Zählerstand ($\tau_{i-12}$) berechnet wird, der den Zählerstand einer Viertelradumdrehung vorher darstellt,
   - der korrigierte Zählerstand ($t_{i-12}$) mit ff. Gleichung bestimmt wird:

   $$t_{i-12} = \tau_{i-12} \cdot (1+k_{i-12}),$$

   - die Berechnung der Korrekturfaktoren ($k_i$) aus der linearen Darstellung des Geschwindigkeitsverlaufes zwischen dem mit dem in dieser Radumdrehung erfassten Korrekturfaktor korrigierten Zahnwert ($t_{i-24}$) und dem mit dem aus der vorigen Umdrehung berechneten Korrekturfaktor korrigierten Zahnwert ($t_i$) folgt,
   - zwischen den Stützpunkten i und i-24 ein linearer Verlauf gebildet und der erfasste Zählerstand i-12 gerade auf die lineare Linie zu diesem Abtastpunkt gelegt wird und
   - der dafür benötigte Korrekturfaktor ($\kappa_{i-12}$) mit ff. Gleichung berechnet wird:

   $$\kappa_{i-12} = \frac{\tau_i \cdot (1+k_i) \cdot \Delta t_b + \tau_{i-24} \cdot (1+k_{i-24}) \cdot \Delta t_a}{\tau_{i-12} \cdot (\Delta t_b + \Delta t_a)} - 1$$

   - wobei die beiden Zeitabschnitte $\Delta t_a$ und $\Delta t_b$ mit ff. Gleichung berechnet werden:

   $$\Delta t_a = \sum_{n=i-11}^{n=i} \tau_n \cdot (1+k_n) \quad \text{und} \quad \Delta t_b = \sum_{n=i-23}^{n=i-12} \tau_n \cdot (1+k_n)$$

2. Verfahren nach Patentanspruch 1, **dadurch gekennzeichnet, dass** nach der Berechnung aller Korrekturfaktoren für jeden Zahn i des Geberrades eine Filterung der Korrekturfaktoren folgt, indem ein gewichteter Mittelwert zwischen den Korrekturfaktoren der momentanen und vorherigen Umdrehung gebildet wird nach folgender Gleichung :

$$k_i = \frac{a \cdot k_{i-48} + \kappa_i}{a + 1}.$$

## Claims

1. A method in motor vehicles for determining speed-independent frequencies, especially resonance frequencies, of a usage signal portion of a rectangular speed signal (S2) generated by means of a rotational speed sensor (2) cooperating with a sensor wheel comprising a specific number (48) of approximately equidistant teeth, **characterised in that,** by means of an electronic control device (1),

   - the duration or the counter reading of each pulse (i) of the rectangular speed signal (S2) is measured,
   - at the instant of the currently measured counter reading ($\tau_i$) the respective correction factor ($k_{i-12}$) to the previously measured counter reading ($\tau_{i-12}$) is calculated showing the counter reading of a quarter wheel rotation,
   - the corrected counter reading ($t_{i-12}$) is determined with the following equation:

   $$t_{i-12} = \tau_{i-12} \cdot (1+k_{i-12}),$$

   - the correction factors ($k_i$) are calculated from the linear view of the speed curve between the tooth value ($t_{i-24}$) corrected with the correction factor detected in this wheel rotation and the tooth value ($t_i$) corrected with the correction factor calculated from the previous rotation,
   - a linear course is formed between the set points i and i-24 and the detected counter reading i-12 is placed just on the linear line to this scanning point and
   - the correction factor ($k_{i-12}$) necessary for this is corrected by the following equation:

   $$k_{i-12} = \frac{\tau_i \cdot (1+k_i) \cdot \Delta t_b + \tau_{i-24} \cdot (1+k_{i-24}) \cdot \Delta t_a}{\tau_{i-12} \cdot (\Delta t_b + \Delta t_a)} - 1$$

   - wherein the two time portions $\Delta t_a$ and $\Delta t_b$ are calculated with the following equation:

   $$\Delta t_a = \sum_{n=i-11}^{n=i} \tau_n \cdot (1+k_n) \qquad \text{and} \qquad \Delta t_b = \sum_{n=i-23}^{n=i-12} \tau_n \cdot (1+k_n)$$

2. A method according to claim 1, **characterised in that** after calculating all the correction factors for each tooth i of the sensor wheel a filtering of the correction factors follows **in that** a weighed average value is formed between the correction factors of the instantaneous and previous rotation according to the following equation:

   $$k_i = \frac{a \cdot k_{i-48} + k_i}{a + 1}.$$

## Revendications

1. Procédé pour calculer, dans des véhicules, des fréquences indépendantes de la vitesse (fréquences de résonance spéciales) d'une fraction de signal utile à partir d'un signal de vitesse (S2) rectangulaire, créé au moyen d'un capteur de vitesse (2), qui coopère avec une roue émettrice présentant un certain nombre (48) de dents pratiquement équidistantes,
   **caractérisé en ce qu'**
   au moyen d'un contrôleur électronique (1)
   la durée et la position du compteur de chaque impulsion (i) du signal de vitesse (S2) rectangulaire est mesurée,
   au moment de la position de compteur actuellement mesurée ($\tau_i$), le facteur de correction ($k_{i-12}$) est calculé pour

la position du compteur ($\tau_{i-12}$) mesurée précédemment, qui représente la position du compteur d'un quart de tour de roue antérieur,
la position du compteur ($t_{i-12}$) corrigée est déterminée par l'équation suivante :

$$t_{i-12} = \tau_{i-12} \cdot (1 + k_{i-12}),$$

le calcul des facteurs de correction ($k_i$) découle de la représentation linéaire de l'allure de vitesse entre la valeur de dents ($t_{i-24}$) corrigée avec le facteur de correction détecté dans ce tour de roue et la valeur de dents ($t_i$) corrigée avec le facteur de correction calculé à partir du tour précédent,
entre les centres fixes i et i-24, une allure linéaire est formée et la position du compteur i-12 détectée est déjà posée sur la ligne linéaire à ce point d'exploration et
le facteur de correction ($k_{i-12}$) utilisé à cet effet est calculé avec l'équation suivante :

$$\kappa_{i-12} = \frac{\tau_i \cdot (1+k_I) \cdot \Delta t_b + \tau_{i-24} \cdot (1+k_{i-24}) \cdot \Delta t_a}{\tau_{i-12} \cdot (\Delta t_b + \Delta t_a)} - 1$$

■ les deux périodes $\Delta t_a$ et $\Delta t_b$ étant calculées avec la même équation :

$$\Delta t_a = \sum_{n=i-11}^{n=i} \tau_n \cdot (1+k_n) \qquad \text{et} \qquad \Delta t_b = \sum_{n=i-23}^{n=i-12} \tau_n \cdot (1+k_n)$$

2. Procédé selon la revendication 1,
   **caractérisé en ce qu'**
   après le calcul de tous les facteurs de correction pour chaque dent i de la roue émettrice, un filtrage des facteurs de correction suit, en formant une valeur moyenne pondérée entre les facteurs de correction du tour de roue momentané et précédent selon l'équation suivante :

$$k_i = \frac{a \cdot k_{i-48} + \kappa_i}{a + 1}.$$

Fig. 1

EP 0 902 292 B1

Fig. 2

EP 0 902 292 B1

EP 0 902 292 B1

Fig. 4

Fig. 3

Fig. 5

Fig. 6